# DEMANDE DE BREVET EUROPEEN

(11) **EP 1 143 156 A1**
(43) Date de publication de la demande: **10.10.2001**
(21) Numéro de dépôt: 01400862.7
(22) Date de dépôt: 04.04.2001
(51) Int. Cl.: F16B 21/04, F16B 21/08, B60K 11/04

(54) **Dispositif de fixation d'un groupe motoventilateur à une facade avant technique de véhicule**

(30) Priorité: 05.04.2000 FR 0004336
(71) Demandeur: Peguform France, 27950 Saint Marcel (FR)
(72) Inventeur: Brogly, Sébastien, 27950 Saint Just (FR); Pelage, Lucien, 27200 Vernon (FR)
(74) Mandataire: Martin, Jean-Jacques

(57) **Abrégé**

Le dispositif de fixation comporte une pièce interne (22) comprenant une tige (24) et une partie d'appui (26) s'étendant radialement en saillie de la tige par référence à un axe (14) de la tige, une pièce externe (20) apte à recevoir la tige et comprenant une partie d'appui (36), et des moyens de verrouillage relatif des deux pièces lorsque la tige est reçue dans la pièce externe. La pièce externe (20) comprend un fût (30) apte à recevoir la tige (24), la partie d'appui (36) de la pièce externe s'étendant radialement en saillie du fût par référence à un axe (14) du fût.

## Description

L'invention concerne principalement la fixation des éléments de refroidissement tels le Groupe Moteur Ventilateur ou la serrure ou le projecteur ou dans une autre mesure tout autre élément fixé sur la façade avant technique.

Il s'agit de monter ces éléments sur la façade avant technique (FAT) de la façon la plus simple.

Il s'agit notamment de réduire les efforts, le temps de montage et les risques de non qualité par l'opérateur et par conséquent le coût de la fixation chez le constructeur.

Aujourd'hui, les fixations chez le constructeur sont réalisés soit :
- par des écrous ou par des goujons sertis pour des éléments à haute tenue mécanique ;
- par des pattes de fixation pour des éléments à faible tenue mécanique.

Par exemple, le GMV (Groupe Moto Ventilateur) est équipé d'un silentbloc sur chacune de ces pattes. La façade est équipée d'écrous sertis ou autre fixation citée auparavant.
a) Lors du montage du GMV, l'opérateur est obligé d'engager une vis pour le centrage du GMV, puis de tenir d'une main Le GMV, et de l'autre la visseuse : il n'y a pas de pré-maintien de la pièce à fixer ;
b) Lors du vissage des vis, il existe un risque de décentrage et de rotation et de foirage des inserts montés sur la FAT : il y a un risque de non qualité accrue ;
c) L'opération finale consiste à visser la pièce sur la FAT afin de respecter les impératifs de tenue mécanique et particulièrement de tenue en vibration.

La difficulté repose sur la nécessité d'opérations sans main libre. Ces solutions présentent donc un temps de montage élevé, des risques en non qualité et un coût important.

Un but de l'invention est de fournir un dispositif de fixation accélérant la fixation des organes à relier en réduisant le coût et en améliorant la qualité de la fixation.

En vue de la réalisation de ce but, on prévoit selon l'invention un dispositif de fixation comportant une pièce interne comprenant une tige et une partie d'appui s'étendant radialement en saillie de la tige par référence à un axe de la tige, une pièce externe apte à recevoir la tige et comprenant une partie d'appui, et des moyens de verrouillage relatif des deux pièces lorsque la tige est reçue dans la pièce externe, dans lequel la pièce externe comprend un fût apte à recevoir la tige, la partie d'appui de la pièce externe s'étendant radialement en saillie du fût par référence à un axe du fût.

Ainsi, pour fixer deux organes au moyen du dispositif de fixation, on peut enfiler des orifices des deux organes sur le fût avant même d'installer la pièce interne. Les deux organes sont donc ainsi convenablement prépositionnés et il n'est pas nécessaire de les maintenir durant le verrouillage des deux pièces. De plus, l'assemblage des deux pièces peut se faire de façon simple et rapide. Le dispositif de fixation selon l'invention est donc d'une utilisation facile, confortable et fiable.

L'invention pourra en outre présenter au moins l'une quelconque des caractéristiques suivantes :
- la tige et le fût sont aptes à être clipsés l'un avec l'autre ;
- les moyens de verrouillage comprennent un assemblage par baïonnettes ;
- la tige et le fût sont aptes à être vissés l'un dans l'autre ;
- la partie d'appui de la pièce externe s'étend à distance de deux extrémités axiales de la pièce externe ;
- la pièce interne est apte à pénétrer dans une extrémité proximale de la pièce externe, la pièce externe présentant une extrémité distale opposée à l'extrémité proximale, la pièce externe comprenant dans une zone contiguë à l'extrémité distale des pattes flexibles en direction de l'axe ;
- la pièce externe comprend au moins un ergot pour clipser la pièce dans un orifice d'un organe suivant la direction axiale ;
- la pièce interne est apte à pénétrer dans une extrémité proximale de la pièce externe, la pièce externe présentant une extrémité distale opposée à l'extrémité proximale, le ou chaque ergot s'étendant entre la partie d'appui et l'extrémité distale ;
- le ou chaque ergot s'éloigne de l'axe en direction de la partie d'appui ;
- chaque patte comprend un ergot ; et
- la pièce externe comprend au moins un relief s'étendant de façon discontinue suivant une direction circonférentielle autour de l'axe.

On prévoit également selon l'invention un ensemble comportant deux organes et un dispositif de fixation reliant les deux organes l'un à l'autre, dans lequel le dispositif de fixation est conforme à l'invention.

Avantageusement, un premier des deux organes est une façade avant technique de véhicule.

Avantageusement, un deuxième des deux organes est un groupe motoventilateur de véhicule.

D'autres caractéristiques et avantages de l'invention apparaîtront encore dans la description suivante de quatre modes préférés de réalisation donnés à titre d'exemples non limitatifs. Aux dessins annexés :
- la figure 1 est une vue en perspective éclatée de l'environnement d'une façade avant de véhicule ;
- la figure 2 est une vue en perspective d'un dispositif de fixation selon un premier mode de réalisation ;
- la figure 3 est une vue en coupe axiale montrant le dispositif de la figure 2 une fois installé ;
- les figures 4 et 5 sont deux vues analogues aux figures 2 et 3 montrant un deuxième mode de réalisation du dispositif ;
- les figures 6 et 7 sont deux vues analogues à la figure 3 montrant deux autres modes de réalisation.

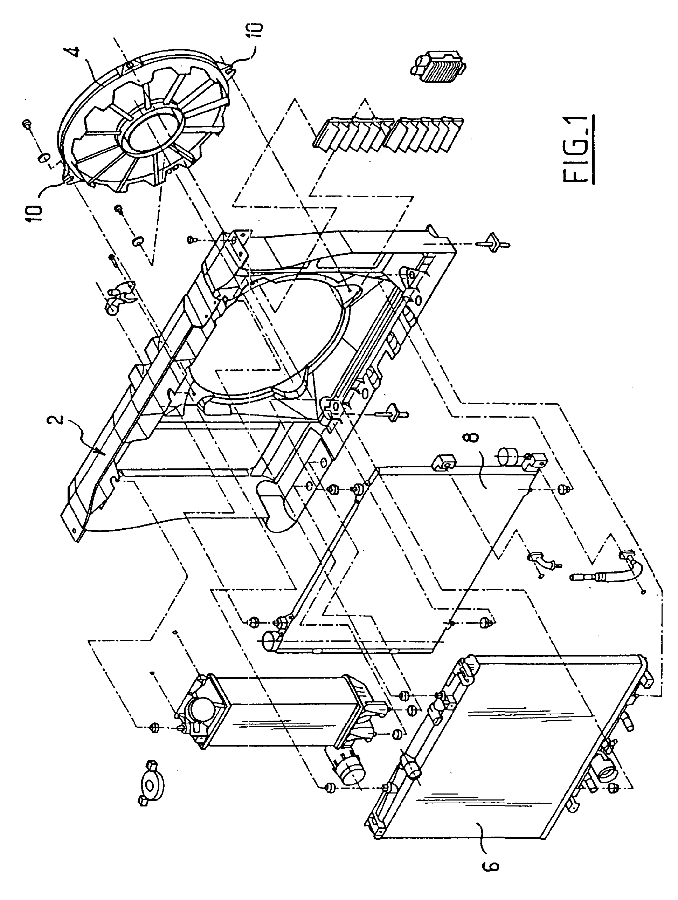

On a illustré à la figure 1 l'environnement d'une façade avant technique de véhicule automobile. La façade 2 est destinée à supporter un groupe motoventilateur 4 fixé en partie arrière dans un orifice central de la façade et un dispositif de refroidissement 6, ici un radiateur, ainsi qu'un condenseur 8 interposé entre le radiateur 6 et la façade 2, ces trois éléments s'étendant verticalement.

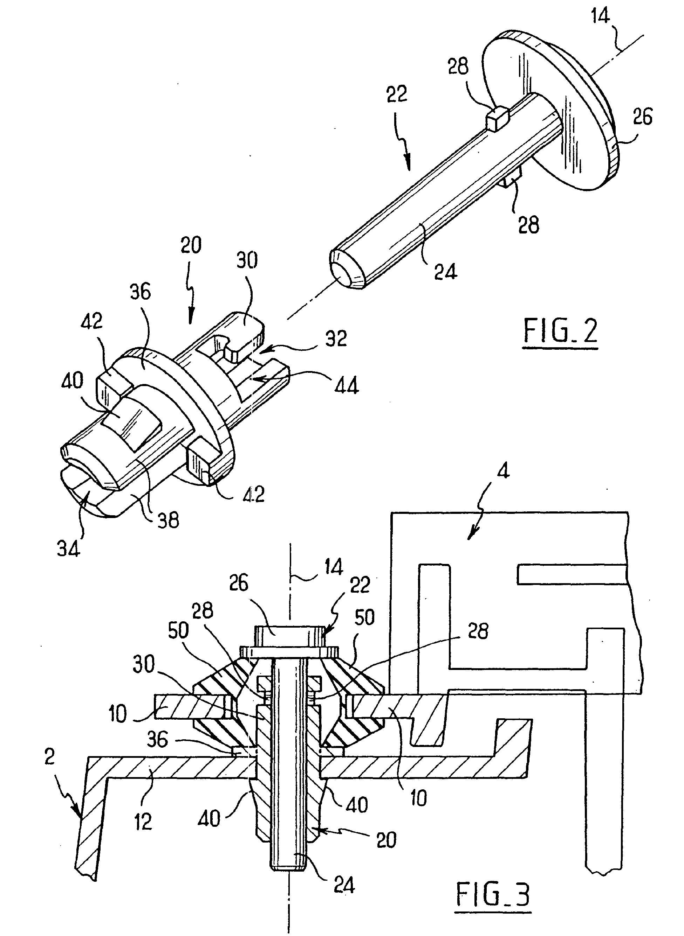

Le groupe motoventilateur, ou GMV, présente des pattes planes verticales 10 présentant des orifices d'axes horizontaux 14. La façade avant technique (FAT) présente des zones de parois 12 pareillement planes verticales et présentant elles aussi des orifices d'axes horizontaux 14. Ces axes ont été illustrés verticalement sur les figures 3, 5, 6 et 7.

On va décrire en référence aux figures 2 et 3 un premier mode préféré de réalisation du dispositif de fixation de l'invention.

Le dispositif comporte une pièce externe femelle 20 et une pièce interne mâle 22. La pièce interne 22 comporte une tige 24 cylindrique lisse d'axe 14, et à une extrémité axiale de la tige une partie d'appui 26 en forme de disque d'axe 14 s'étendant radialement en saillie de la tige 24. Au voisinage de la partie d'appui 26 mais à distance de celle-ci, la pièce interne présente deux reliefs 28 s'étendant radialement en saillie de la tige, et diamétralement opposés de part et d'autre de l'axe.

La pièce externe 20 comporte un fût cylindrique 30 d'axe 14. Ce fût creux est ouvert à une extrémité axiale proximale 32. L'autre extrémité axiale de la pièce est une extrémité distale 34. Environ à mi-chemin des deux extrémités, la pièce comporte une partie d'appui 36 en forme de disque d'axe 14. Entre l'extrémité distale 34 et la partie d'appui 36, le fût est divisé en deux suivant un plan radial afin de définir deux pattes 38 distantes l'une de l'autre et élastiquement flexibles en direction l'une de l'autre et vers l'axe. La face externe des pattes est cylindrique. Chaque patte porte sur sa face externe un ergot 40 incliné afin de s'éloigner de l'axe en direction de la partie d'appui 36.

La partie d'appui présente deux reliefs 42 s'étendant axialement en saille de sa face dirigée vers l'extrémité distale 34. Les deux reliefs sont discontinus à l'égard d'une direction circonférentielle à l'axe.

Le fût 30 est entâmé dans sa paroi par deux échancrures 44 en forme de « J ». Chaque échancrure présente ainsi une branche d'entrée parallèle à l'axe 14, suivie par une branche perpendiculaire à cet axe, suivie par une branche borgne parallèle à l'axe 14. Les échancrures sont aptes à recevoir les reliefs 28 respectifs.

Pour fixer le GMV à la FAT, on introduit l'extrémité distale 34 de la pièce externe 20 dans l'orifice de la paroi 12 de la FAT. Cet orifice a un diamètre légèrement supérieur à celui des pattes 38. De plus, il présente deux échancrures de réception des reliefs 42. Une fois la pièce reçue dans l'orifice. La partie d'appui 36 vient en butée axiale sur la paroi 12 du côté opposé aux ergots 40. Les deux pattes 38 se sont élastiquement fléchies au passage de l'orifice en raison de la présence des ergots. Les ergots 40 interdisent le retrait de la pièce. De plus, les deux reliefs 42 reçus dans les échancrures de la paroi 12 bloquent la pièce 20 à rotation autour de l'axe 14 par rapport à la FAT

L'orifice de la patte 10 du GMV reçoit un élément 50 en élastomère connu en soi (tel qu'un silentbloc) de forme circulaire de révolution à orifice central. On enfile ensuite l'élément 50 sur le fût 30, ce qui positionne le GMV par rapport à la FAT radialement et axialement.

On introduit enfin la pièce interne 22 dans l'extrémité proximale 32 de la pièce externe 20 et on positionne les reliefs 28 au fond des échancrures 44 pour réaliser un assemblage par baïonnette. Le jeu de montage est rattrapé par l'élément 50. La partie d'appui 26 est en appui axial sur celui-ci.

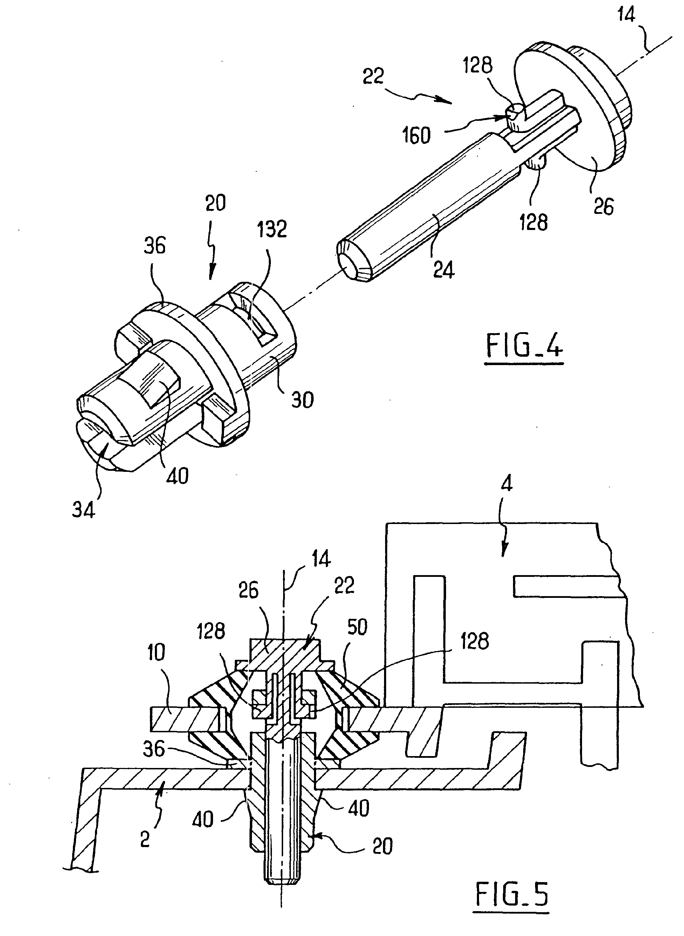

Le mode de réalisation de la figure 4 est proche du précédent. Les éléments différents porteront des références numériques augmentées de 100.

Sur la tige 24, les reliefs 128 sont maintenant portés par des pattes parallèles à l'axe 14, distantes l'une de l'autre, s'étendant à partir de la partie d'appui 26 et flexibles élastiquement en direction l'une de l'autre. L'extrémité des pattes opposée à la partie d'appui présente une rampe 160 provoquant la rétraction radiale des pattes lors de l'introduction de la tige dans le fût. Sur la pièce externe, les échancrures en « J » sont remplacées par des fenêtres s'étendant suivant la direction circonférentielle.

Pour verrouiller les deux pièces l'une à l'autre, on introduit la tige 24 dans le fût 30. Les pattes 128 se rétractent puis se détendent lorsque les reliefs sont reçus dans les fenêtres 132. On réalise ainsi un assemblage par clipsage. Le reste du montage est inchangé par rapport au premier mode.

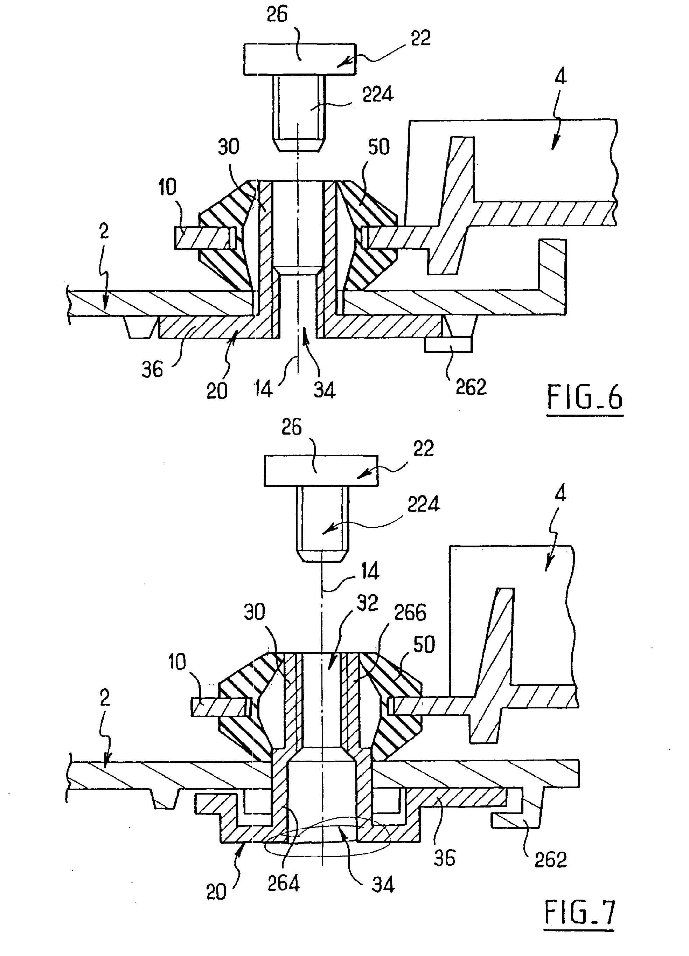

Dans le mode de réalisation de la figure 6, les références numériques ont été augmentées de 200 pour certaines pièces. La tige 224 est filetée. Les reliefs 28 sont supprimés. La pièce interne 22 forme donc une vis.

Sur la pièce externe 20, la partie d'appui 36 forme l'extrémité distale. Le disque présente une échancrure entâmant localement son bord. La partie 12 de la FAT comporte une patte 262 recourbée traversant cette échancrure au passage de la partie d'appui. On fait ensuite tourner la pièce externe 20 autour de son axe pour que la patte 262 et l'échancrure ne soient plus en coïncidence. La pièce externe est ainsi bloquée sur la FAT.

Le fût 230 est fileté intérieurement, afin de former une liaison vis-écrou avec la pièce interne. L'assemblage a lieu comme précédemment, la partie d'appui de la vis venant en appui axial sur l'élément 50.

Dans le mode de réalisation de la figure 7, le fût est en outre fileté extérieurement afin d'être vissé dans l'orifice de la FAT, lui aussi fileté à cette fin. Le tronçon 264 du fût fileté extérieurement est distinct du tronçon 266 fileté intérieurement. Ce dernier est contigu à l'extrémité proximale 32 et a un plus petit diamètre que le tronçon fileté intérieurement.

Il est préférable d'augmenter localement l'épaisseur de la FAT au voisinage de l'orifice. Pour contourner cette surépaisseur, la partie d'appui de la pièce externe 20 a un profil en « S » depuis l'axe vers sa périphérie.

On voit que dans ces différents modes de réalisation, le fût 30 assure un pré-maintien des pièces 2, 4, un centrage des pièces et parfois une butée antirotation.

Le mode de réalisation à baïonnette évite les risques de foirage et rend inutile l'emploi d'une visseuse.

## Revendications

1. Dispositif de fixation comportant :
- une pièce interne (22) comprenant une tige (24 ; 224) et une partie d'appui (26) s'étendant radialement en saillie de la tige par référence à un axe (14) de la tige ;
- une pièce externe (20) apte à recevoir la tige et comprenant une partie d'appui (36) ; et
- des moyens de verrouillage relatif des deux pièces lorsque la tige est reçue dans la pièce externe,
**caractérisé en ce que** la pièce externe (20) comprend un fût (30) apte à recevoir la tige (24 ; 224), la partie d'appui (36) de la pièce externe s'étendant radialement en saillie du fût par référence à un axe (14) du fût.

2. Dispositif selon la revendication 1,
**caractérisé en ce que** la tige (24) et le fût (30) sont aptes à être clipsés l'un avec l'autre.

3. Dispositif selon la revendication 1,
**caractérisé en ce que** les moyens de verrouillage comprennent un assemblage par baïonnettes (28, 44).

4. Dispositif selon la revendication 1,
**caractérisé en ce que** la tige (224) et le fût (30) sont aptes à être vissés l'un dans l'autre.

5. Dispositif selon l'une quelconque des revendications 1 à 4, **caractérisé en ce que** la partie d'appui (36) de la pièce externe (20) s'étend à distance de deux extrémités axiales (32, 34) de la pièce externe.

6. Dispositif selon l'une quelconque des revendications 1 à 5, **caractérisé en ce que** la pièce interne (22) est apte à pénétrer dans une extrémité proximale (32) de la pièce externe (20), la pièce externe présentant une extrémité distale (34) opposée à l'extrémité proximale (32), la pièce externe comprenant dans une zone contiguë à l'extrémité distale des pattes (38) flexibles en direction de l'axe (14).

7. Dispositif selon l'une quelconque des revendications 1 à 6, **caractérisé en ce que** la pièce externe (20) comprend au moins un ergot (40) pour clipser la pièce dans un orifice d'un organe (2) suivant la direction axiale (14).

8. Dispositif selon la revendication 7,
**caractérisé en ce que** la pièce interne (22) est apte à pénétrer dans une extrémité proximale (32) de la pièce externe (20), la pièce externe présentant une extrémité distale (34) opposée à l'extrémité proximale, le ou chaque ergot (40) s'étendant entre la partie d'appui (36) et l'extrémité distale (34).

9. Dispositif selon l'une quelconque des revendications 7 ou 8, **caractérisé en ce que** le ou chaque ergot (40) s'éloigne de l'axe (14) en direction de la partie d'appui (36).

10. Dispositif selon la revendication 6 et selon l'une quelconque des revendications 7 à 9, **caractérisé en ce que** chaque patte (38) comprend un ergot (40).

11. Dispositif selon l'une quelconque des revendications 1 à 10, **caractérisé en ce que** la pièce externe (20) comprend au moins un relief (42) s'étendant de façon discontinue suivant une direction circonférentielle autour de l'axe (14).

12. Ensemble comportant deux organes (2, 4) et un dispositif de fixation (20, 22) reliant les deux organes l'un à l'autre, **caractérisé en ce que** le dispositif de fixation est conforme à l'une des revendications 1 à 11.

13. Ensemble selon la revendication 12,
**caractérisé en ce qu'**un premier (2) des deux organes est une façade avant technique de véhicule.

14. Ensemble selon l'une quelconque des revendications 12 à 13, **caractérisé en ce qu'**un deuxième (4) des deux organes est un groupe motoventilateur de véhicule.
